(19) **Europäisches Patentamt**
**European Patent Office**
**Office européen des brevets**

(11) **EP 1 831 592 B1**

(12) **EUROPEAN PATENT SPECIFICATION**

(45) Date of publication and mention
of the grant of the patent:
**30.05.2012 Bulletin 2012/22**

(51) Int Cl.:
*F16H 61/662* (2006.01)     *F16G 5/16* (2006.01)

(21) Application number: **05825422.8**

(22) Date of filing: **23.12.2005**

(86) International application number:
**PCT/NL2005/000873**

(87) International publication number:
**WO 2006/068468 (29.06.2006 Gazette 2006/26)**

(54) **TRANSMISSION WITH CONVEX PULLEY SHEAVES AND A DRIVE BELT**

GETRIEBE MIT KONVEXEN ANTRIEBSSCHEIBEN UND ANTRIEBSRIEMEN

TRANSMISSION UTILISANT DES POULIES A REAS CONVEXES ET UNE COURROIE MOTRICE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **24.12.2004 NL 1027887**

(43) Date of publication of application:
**12.09.2007 Bulletin 2007/37**

(73) Proprietor: **ROBERT BOSCH GMBH
70442 Stuttgart (DE)**

(72) Inventors:
• **VAN DER LEEST, Adrianus, Johannes,
Wilhelmus**
**NL-5388 RX Nistelrode (NL)**
• **BRANDSMA, Arjen**
**NL-5045 WN Tilburg (NL)**
• **VAN SPIJK, Johannes, Gerardus, Ludovicus,
Maria**
**NL-5151 MR Drunen (NL)**

(74) Representative: **Plevier, Gabriel Anton Johan
Maria
Bosch Transmission Technology B.V.
PO Box 500
5000 AM Tilburg (NL)**

(56) References cited:
**EP-A- 1 441 151     EP-B- 1 218 654
WO-A-02/061304     NL-C2- 1 022 157
NL-C2- 1 023 668     US-A1- 2002 077 211**

• **PATENT ABSTRACTS OF JAPAN vol. 2002, no.
05, 3 May 2002 (2002-05-03) -& JP 2002 031215 A
(NISSAN MOTOR CO LTD), 31 January 2002
(2002-01-31)**
• **PATENT ABSTRACTS OF JAPAN vol. 012, no. 272
(M-724), 28 July 1988 (1988-07-28) -& JP 63 053352
A (FUJI HEAVY IND LTD), 7 March 1988
(1988-03-07) cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a drive belt for a continuously variable transmission provided with a pulley with convex sheaves, as described in the preamble of Claim 1.

The structure and operation of a transmission of this type is considered to be known, for example from European Patent publication number 1218654, which also shows one of the known types of drive belts or chains. The drive belt shown is generally known as the Van Doorne push belt and is described in more detail, for example, in patent publication WO-A-2002/061304. This push belt is characterized, inter alia, by a series of transverse elements comprising a lower body, a middle body and an upper body. The lateral sides of the lower body are in this case provided with contact surfaces for contact with the the sheaves of a driving or primary pulley and those of a driven or secondary pulley of the transmission, while part of the top side of the lower body, facing the top body, i.e. a radially outwardly oriented edge thereof, forms a supporting surface for a continuous tensioning element, which is generally formed by one or more groups of a number of nested, flat, relatively thin rings made from metal. The top body of the transverse elements, which is substantially in the shape of an arrowhead, is located radially outside the tensioning element, and retains it in the vertical direction, while the middle body, which is located at the level of the tensioning element, connects the lower body and upper body to one another. The transverse elements are accommodated in the drive belt such that they can move with respect to the circumferential direction of the tensioning element.

The Van Doorne push belt includes a, number of the said transverse elements which is such that at least virtually the entire circumference of the tensioning element is filled. Partly as a result of this, a driving power can be transmitted between the pulleys of the transmission, with the transverse elements advancing one another, with support and guidance from the tensioning element. Unlike in the case of the known chain, which is likewise formed from metal, or the known V-belt, which is made from composite material, both of which types of drive belt transmit the driving power by means of a tensile force, a virtually continuous series of transverse elements is clamped between the sheaves of a pulley, so that the clamping force which is exerted on the drive belt by this pulley during operation is distributed more or less uniformly over a relatively large number of contact surfaces. Therefore, the contact pressure which occurs between the drive belt, i.e. its transverse elements, and a pulley sheave as a result of the clamping force remains limited in relative terms.

Drive belts of this type are generally used in a transmission with two pulleys, each provided with two sheaves in the form of straight truncated cones, of which for cost reasons only one sheave is mounted such that it can move in the axial direction with respect to the other sheave, i.e. the fixed sheave, and a respective pulley axle in order to change the running radius of the drive belt between the pulley sheaves and therefore the transmission ratio of the transmission, which latter is given by the quotient of the running radii at the location of the two pulleys. Various measures are known for overcoming the adverse effect of this, namely the fact that there is at least some degree of skew running of the drive belt between the pulleys, which degree of skew running varies with the transmission ratio. Measures of this type are generally realized in the drive belt itself, but may also form part of the transmission. An example of this latter option is given by Japanese Patent publication JP-A-63-053352, according to which the conical surface of the two fixed sheaves of the transmission is of spherical or convex design. In this context, the term spherical or convex means that the straight cone shape of the surface of a pulley sheave is replaced by a cone shape which is slightly convexly curved. The cone surface is also referred to as the drive belt running surface, or running surface for short, of a pulley sheave.

A similar drive belt is disclosed in EP 1441151 A2.

The Dutch Patent Application numbered NL-A-1022157 and the Dutch Patent Applications numbered NL-1023668 and NL-1024918, which latter publications were not published before the priority date of the present application, all in the name of the present Applicant, also propose making the running surface of at least one sheave convex in order to achieve various effects. The precise appearance of the convexity used is in each case dependent on the effect which is to be achieved. To allow optimum interaction with the convex pulley sheaves, it is also known for the contact surfaces of the transverse elements to be correspondingly curved, i.e. a range of what are known as pulley angles, defined with respect to the radial direction perpendicular to the pulley axle, used for the convex running surface of the four pulley sheaves of the transmission is also used in the convex curvature of the said contact surfaces.

Where, according to the prior art, the radius of curvature or its profile over the radial dimension of the convex pulley sheave is given by the prescribed radial dimension of the pulley sheave and the effect which can be achieved by the respective convexity, relatively little attention is paid to the shaping of the contact surfaces of the transverse elements. Therefore, the analysis on which the present invention is based has the purpose of filling this gap and of providing a definition of the radial curvature radius of the contact surfaces of the transverse elements. More particularly, the invention provides insight into the relevant working principles of the transmission and, based on the above, arrives at a design rule for optimally establishing the abovementioned curvature radius in the radial direction of the contact surfaces. The design rule according to the invention deviates from the solution which is obvious to the mechanical engineering designer, which is to use a value which is constant and as high as possible, determined by the available dimension of the contact surfaces - i.e. the height dimension of the lower body - and the said range of pulley angles in the transmission which should also be present in the contact surfaces.

According to the analysis which is expounded below in the description of the figures, the present invention to this end provides a drive belt which uses the combination of measures according to Claim 1. In a drive belt of this type, the radial curvature radius of the contact surfaces thereof or its profile is matched to the profile of the radius of curvature in the tangential direction used for the pulley sheaves, in which context the prevention of slipping of the drive belt with respect to the pulley sheaves is the most important design criterion. As a result, in particular wear to the contact surfaces during operation is uniformly distributed and partly as a result is advantageously low.

The present invention is explained in more detail below with reference to the appended figures, in which:

Figure 1 diagrammatically depicts a cross section through a continuously variable transmission provided with two pulleys and a drive belt according to the prior art,

Figure 2 shows a simplified side view of the transmission from Figure 1,

Figure 3 shows a cross section through what is known as a push belt, as can preferably be used as drive belt in the transmission according to the invention,

Figure 4 shows a side view of a transverse element from the push belt shown in Figure 3,

Figure 5 shows a detail of a pulley sheave, and in particular its running surface, as can be used in combination with the push belt from Figure 3 in the transmission according to the invention,

Figure 6 shows a diagram in which, by way of a first example, an equilibrium clamping force ratio of the transmission, which has been approximated by a theoretical analytical route, is plotted against the transmission ratio of this transmission with a pulley angle which is prescribed and constant for the two pulleys,

Figure 7 shows a diagram in which, by way of a second example, an equilibrium clamping force ratio of the transmission, which has been approximated by a theoretical route, is plotted against the transmission ratio of the transmission with a contour of the respective pulley angle which is prescribed for a primary pulley of the transmission and a contour of the respective pulley angle which is prescribed for a secondary pulley of the transmission,

Figure 8 shows a diagram in which for the said second example the contact pressure between the secondary pulley and the drive belt, the contact surfaces of the transverse elements are provided with a constant radial radius of curvature, and in which

Figure 9 shows a diagram corresponding to that shown in Figure 8, but with the radial curvature radius of the contact surfaces of the transverse elements having been optimized in accordance with the present invention.

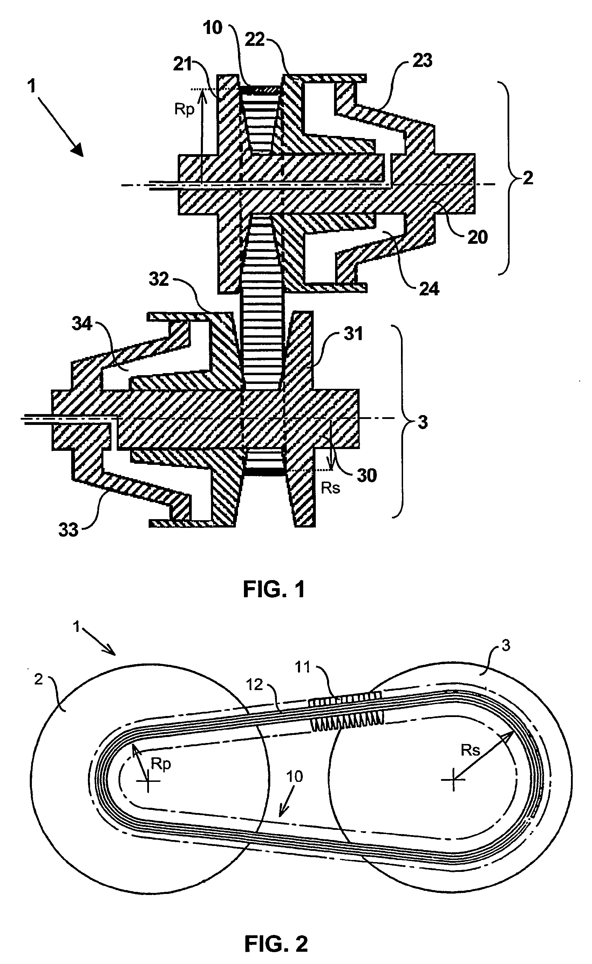

Figure 1 diagrammatically depicts a cross section through a continuously variable transmission 1 according to the prior art. The known transmission 1 comprises a primary pulley 2, which can be driven by an engine (not shown), with a couple of forces Tp, and a secondary pulley 3, which can drive a load (not shown) with a couple of forces Ts. Both pulleys 2 and 3 are provided with a pulley sheave 21, 31 which is secured fixedly to the respective pulley axle 20, 30 and with a pulley sheave 22, 32 which can be displaced in the axial direction with respect to the said axle 20, 30. A drive belt 10, more particularly a push belt 10, is clamped between the pulley sheaves 21, 22, 31, 32, so that mechanical power can be transmitted between the two axles 20 and 30 with the aid of friction. An axially oriented force with which the drive belt 10 is clamped for each pulley 2, 3, to be referred to below as the primary clamping force Kp and the secondary clamping force Ks, respectively, is in this case realized by applying a hydraulic pressure in a respective pressure chamber 24, 34 of the two pulleys 2 and 3. A transmission controller (not shown) is used to determine and realize the force levels desired for the clamping forces Kp, Ks.

The transmission ratio Rs/Rp of the transmission 1 is given by the ratio between a secondary running radius Rs and a primary running radius Rp of the drive belt 10, i.e. the effective radial position thereof between the pulley sheaves 21, 22, 31 and 32 of the respective pulleys 2 and 3. The said running radii Rp and Rs, and therefore the transmission ratio Rs/Rp, defined in accordance with the invention, of the transmission 1 can be varied by causing the displaceable sheaves 22, 32 to move in opposite axial directions along the respective pulley axles 20, 30. Figure 1 illustrates the transmission 1 by way of example with a low transmission ratio Rs/Rp, i.e. with a relatively large primary running radius Rp and a relatively small secondary running radius Rs.

It should be noted that the transmission ratio Rs/Rp, the primary running radius Rp and the secondary running radius Rs are in an unambiguously defined and geometrically determined relationship with one another, which is determined, inter alia, by the length of the drive belt 10, the distance between the axes of rotation of the respective pulleys 2, 3 and the largest and smallest possible running radii Rp and Rs, so that they can be calculated from one another as required.

Figure 2 shows the known transmission 1 once again, in the form of an axial side view, with the primary pulley 2 having the primary axle 20 on the left-hand side of the figure and the secondary pulley 3 having the secondary axle 30 on the right-hand side of the figure. Unlike in Figure 1, in this figure the transmission 1 is illustrated with a relatively high transmission ratio Rs/Rp, in which the primary running radius Rp is smaller than the secondary running radius Rs. The drive belt 10 shown is what is known as a push belt 10 which comprises a virtually continuous series of transverse elements 11, only some of which are shown, for the sake of simplicity, and at least one set 12 of a number of radially nested, continuous, flat and thin metal rings.

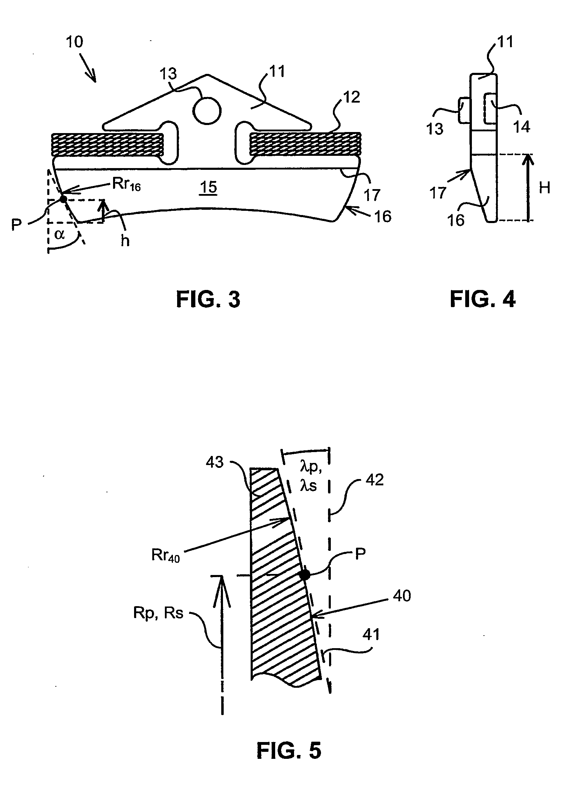

This push belt 10 is shown in more detail in Figures 3 and 4, Figure 3 showing a cross section through the push belt 10 and Figure 4 showing a side view in the axial direction of a transverse element 11 from it. The cross section shows the front view of the transverse element 11, which is provided on either side with a recess, in each of which a set of rings 12 is accommodated. The sets of rings 12 and the transverse element 11 enclose one another in the radial or height direction, but the transverse elements 11 can move along the sets of rings 12 in the circumferential direction thereof. The transverse elements 11 are also provided with a protuberance in the circumferential direction of the push belt 10, i.e. stud 13, and with a pocket 14 arranged in an opposite main side of the element 11, which stud 13 and pocket 14 are used to stabilize the series of transverse elements 11 with respect to one another in the push belt 10.

As seen from the side, a bottom section 15 of the transverse element 11 at least effectively tapers radially inwards, so that adjacent transverse elements 11 can tilt with respect to one another and the push belt 10 can describe an arc, for example where it is clamped between the pulley sheaves 21, 22, 31, 32 of the respective pulleys 2 and 3. It should be noted that the abovementioned effective radial position, i.e. the effective running radius Rp, Rs of the push belt 10, substantially corresponds to a radial position of the top side of the bottom section 15 of the transverse element 11, which top side is also referred to as the tilting line 17 of the transverse elements 11, along which they are in contact with one another in the said arc. The bottom section 15 is also provided on either side with what are known as contact surfaces 16, via which the transverse element 11 is clamped between the pulley sheaves 21, 22; 31, 32, the rotation of a driving pulley 2 being transmitted via friction to the clamped transverse elements 11. This can produce a considerable pushing force between the transverse elements 11, with the result that they advance one another along the ring sets 12 in the direction of the driven pulley 3. Then, where the push belt 10 is clamped between the sheaves 31 and 32 of the driven pulley 3, the pushing force which is present between the transverse elements 11 is virtually completely transmitted via friction thereof. The transverse elements 11 finally push one another back from the driven pulley 3 to the driving pulley 2 under a relatively low pushing force. The sets of rings 12 in this context ensure that the transverse elements 11 continue to follow the path intended for the push belt 10.

Figure 5 illustrates a detail of a pulley sheave 43 based on a cross section through it as seen in the tangential direction. What is known as a running surface 40 of the pulley sheave 43, by means of which it comes into contact with a contact surface 16 of the transverse elements 11, is provided with a radial curvature with an optionally variable radial curvature radius $Rr_{40}$, a pulley angle $\lambda p$, $\lambda s$ defined between a tangent 41 and the radial direction 42 at a possible contact point P between the running surface 40 and the contact surface 16 increasing as seen in this radial direction. Consequently, the running surfaces 40 in the transmission 1, as seen in the tangential cross section in Figure 5, describe a contour which can be defined as the relationship between the local pulley angle $\lambda p$, $\lambda s$ and the transmission ratio Rs/Rp of the transmission 1, which determines the radial position Rp, Rs of the instantaneous contact point P. For each pulley 2, 3, the said contours are generally identical for the two pulleys 21, 22; 31, 21 and are then respectively referred to as the primary pulley angle contour $\lambda p(Rs/Rp)$ and the secondary pulley angle contour $\lambda s(Rs/Rp)$, which generally do differ from one another. The associated profile of the radial curvature radius $Rr_{40}$ of the running surfaces 40 can in this case also be defined in relation to the transmission ratio Rs/Rp and is referred to as the radial convexity contour $Rr_{40}(Rs/Rp)$. Therefore, the running surfaces 40 in the transmission 1, as seen in the tangential cross section of Figure 5, describe a contour which can be defined as the relationship between the local pulley angle $\lambda p$, $\lambda s$ and the transmission ratio Rs/Rp of the transmission 1, which defines the radial position Rp, Rs of the instantaneous contact point P.

In addition, the running surface 40 of the pulley sheave 43, on account of its conical shape, is also curved in the tangential direction with a radius of curvature $Rt_{40}$, which likewise varies with the radial position Rp, Rs of the said contact point P on the pulley sheave 43, i.e. the respective running radius Rp, Rs of the drive belt 10. Therefore, the tangential curvature radius $Rt_{40}$ of the running surfaces 40 can also be defined in relation to the transmission ratio Rs/Rp. The following formula (written out here for the secondary pulley 3 by way of example) applies to this so-called tangential convexity contour $Rt_{40}(Rs/Rp)$:

$$Rt_{40}(Rs/Rp) = \frac{Rs(Rs/Rp)}{\sin[\lambda s(Rs/Rp)]} \qquad (1)$$

To allow optimum interaction with the curved running surfaces 40 of the pulleys 2 and 3, the contact surfaces 16 of the transverse element 11, as seen in the cross section through the push belt 10 as shown in Figure 3, are also provided with a curvature. In this case, a range of contact angles $\alpha$, which should at least correspond to the range of pulley angles $\lambda$ covered by pulley angle contours $\lambda p(Rs/Rp)$ and $\lambda s(Rs/Rp)$ of the running surfaces 40 of the pulleys 2 and 3, is defined in the radial direction in the contour of the contact surfaces 16.

However, the prior art does not provide any more detailed discussion as to how a range of contact angles $\alpha$ of this nature is to be implemented in the design of the transverse element 11, i.e. according to what contact angle contour $\alpha(h)$ the contact surfaces 16 of the transverse elements 11 should be optimally curved, in which context the contact angle contour $\alpha(h)$ can be defined as the profile of the contact angle $\alpha$ in relation to a vertical or radial position h on the contact surface 16 with respect to the total vertical dimension H thereof, which is illustrated in Figures 3 and 4. More particularly, the prior art does not describe any radial curvature radius $Rr_{16}$ or profile thereof for the contact surfaces 16. Therefore, the person skilled in the art will normally seek to use a constant radial curvature radius $Rr_{16}$ which is as high as possible, by means of which the required range of contact angles $\alpha$ is realized within the available total vertical dimension H of the contact surface 16. However, in accordance with the present invention, a design of this type does not generally represent the most optimum solution.

The text which follows uses a theoretical analysis to provide and justify a new definition for the profile, i.e. the contour of this radial curvature radius $Rr_{16}$, which in the context of the present invention is defined in relation to the transmission ratio Rs/Rp between the drive belt 10 and the secondary pulley 3, which determines the contact point P between the running surface 40 and the contact surface 16. This contour is referred to as the flank contour $Rr_{16}(Rs/Rp)$ and could equally well be defined in relation to the contact point P with the primary pulley 2.

As is generally known and described, for example, in NL-1024918, the minimum primary clamping force Kp required, i.e. the minimum normal force required to achieve a sufficiently high frictional force between the drive belt 10 and the primary pulley 2 for transmitting the supplied couple of forces Tp between them, is at least approximately given by the equation:

$$Kp = \frac{Tp * \cos(\lambda_p)}{2 * \mu_T * Rp} \qquad (2)$$

in which $\mu_T$ is an effective coefficient of friction in the tangential direction, i.e. torque transmission coefficient between the drive belt 10 and the primary pulley 2.

The minimum secondary clamping force Ks required can be calculated in a corresponding way from the torque Ts supplied to the secondary pulley 3 and the secondary running radius Rs. However, since the ratio Tp/Rp or Ts/Rs between the torque Tp, Ts and the running radius Rp, Rs, ignoring possible losses, is necessarily equal for both pulleys 2, 3, the minimum secondary clamping force Ks required is equal to the minimum primary clamping force Kp required. However, during operation of the transmission 1, one of these two clamping forces Kp and Ks will generally have to be greater than the other in order to adopt and/or maintain the desired transmission ratio Rs/Rp.

The ratio between the clamping forces Kp and Ks which is required for an equilibrium state of the transmission 1, i.e. for a constant transmission ratio, known as the equilibrium clamping force ratio KpKs, has its origin in the equilibrium condition that for each pulley 2, 3 a tensile force Ft is generated in the sets of rings 12 of the drive belt 10, and these tensile forces should be equal to one another. The tensile force Ft for each pulley 2 and 3 is produced as a result of the radial forces Frp and Frs acting on the drive belt 10 in the radial direction, which forces Frp and Frs are generated as a result of the local contact angle $\lambda p$, $\lambda s$ and the substantially axially oriented clamping force Kp, Ks applied between the sheaves 21 and 22, 31 and 32, respectively, for each pulley 2, 3. Therefore, the equilibrium clamping force ratio KpKs will be influenced through the specific primary pulley angle contour $\lambda p(Rs/Rp)$ used for each transmission 1 and the secondary pulley angle contour $\lambda s(Rs/Rp)$.

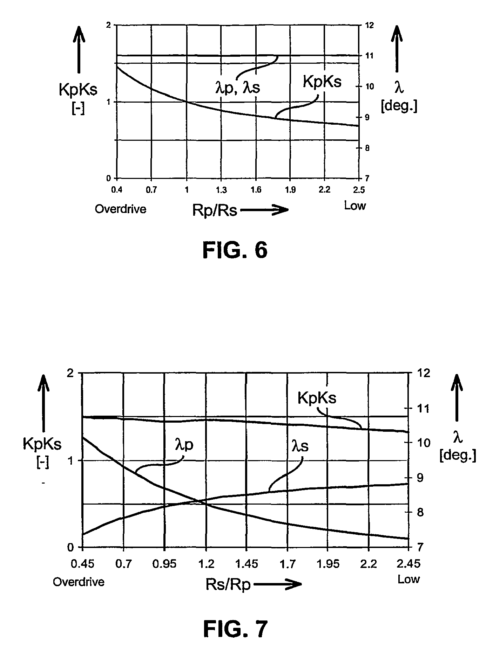

To illustrate the above, Figures 6 and 7, which have been transferred from NL-1024918, show what is known as a KpKs curve for two transmission designs, which are characterized by the pulley angle contours $\lambda p(Rs/Rp)$, $\lambda s(Rs/Rp)$ used therein, wherein the said equilibrium clamping force ratio KpKs is plotted in relation to the transmission ratio Rs/Rp of the transmission 1 in the range between the so-called Low and Overdrive transmission ratios Rs/Rp. Figures 6 and 7 also show the primary pulley angle contour $\lambda p(Rs/Rp)$ and the secondary pulley angle contour $\lambda s(Rs/Rp)$

of the respective transmission design.

It can be seen from Figure 6 that, at least for this transmission design, in which the two pulley angles have a constant and equal value of 11 degrees, the equilibrium clamping force ratio KpKs varies from a value less than 1 in Low to a value greater than 1 in Overdrive. In Figure 7, by contrast, the equilibrium clamping force ratio KpKs, at least for a transmission design in which the pulley angle contours λp(Rs/Rp), λs(Rs/Rp) also shown are used, is always greater than 1, so that in this case the primary clamping force Kp required for a constant transmission ratio Rs/Rp is always greater than the secondary clamping force Ks required for this purpose.

It is also known and obvious that, at least in a first approximation, undesirable slipping of the drive belt 10 and a pulley 2, 3 with respect to one another as a result of a clamping force Kp, Ks which is too low at that instant, for example if the torque level rises unexpectedly, will occur at the location of the pulley 2, 3, referred to below as the slipping pulley 2, 3, where the lowest of the clamping forces Kp, Ks is respectively being exerted, namely the primary pulley 2 in the case of an equilibrium clamping force ratio KpKs less than 1 and the secondary pulley 3 in the case of an equilibrium clamping force ratio KpKs greater than 1.

Although this slipping will generally be of short duration, since subsequently either the torque level drops again or the respective clamping force Kp, Ks is adapted to the increased torque level, in particular the associated heat which is produced can lead to what is known as adhesive wear in particular to the drive belt 10. In particular the instantaneous contact pressure between the drive belt 10 and the respective pulley 2, 3 is in this context the determining factor in the degree of wear. To obtain an acceptable service life of the transmission 1 and more particularly the drive belt 10, when designing it it is necessary to abide by a maximum value for the said contact pressure. In principle, this maximum permitted value also forms the optimum value for the contact pressure from an efficiency perspective, since if this value is used, on the one hand the transmission 1 can have the smallest possible volume and on the other hand, at least according to applicable tribological laws, the said torque transfer coefficient $\mu_T$ will adopt a high value, with the result that at a constant torque level lower clamping forces Kp, Ks can advantageously be used.

The two insights referred to above in connection with the slipping pulley 2, 3 and the optimum contact pressure can unexpectedly and advantageously be combined to provide a completely new insight which gives rise to a guideline for the radial curvature radius $Rr_{16}$ of the contact surfaces 16 of the transverse elements 11 of the drive belt 10. According to the present invention, the optimum value for the latter radius of curvature $Rr_{16}$ is in this case matched, in every transmission ratio Rs/Rp of the transmission 1, to the local radial and tangential curvature radii $Rr_{40}$ and $Rt_{40}$ of the running radius of the respective slipping pulley 2, 3, specifically in such a manner that the contact pressure between them has an at least approximately constant value, which preferably at least approximately corresponds to the said maximum permissible value for it.

The profile of the optimum radial curvature radius $Rr_{16}$ over the height H of the contact surface 16 could in this case be determined empirically by experimentation, but it is also possible for the contact pressure in the local contact point of the contact surfaces 16 and the running surfaces 40 to be determined by calculation on the basis of the Hertzian elliptical point contact model. Applied to the present point contact between the pulleys 2, 3 and the drive belt 10, this model gives the following laws a to e:

a) What is known as the reduced radius in the local contact point R[m]:

$$\frac{1}{Rr}=\frac{1}{Rr_{40}}+\frac{1}{Rr_{16}} \; ; \quad \frac{1}{Rt}=\frac{1}{Rt_{40}}+\frac{1}{Rt_{16}} \; ; \quad \frac{1}{R}=\frac{1}{Rr}+\frac{1}{Rt} \qquad (3)$$

in which the indices 40 and 16 denote the two bodies in the contact, namely the running surface 40 of the respective slipping pulley 2, 3 and the contact surface 16 of the transverse elements 11. Rr relates to the local curvature radius of the respective body 40, 16, which is measured along the radial direction of the running surfaces 40, or the width direction of the contact surfaces 16, and Rt relates to the local curvature radius of the respective body 40, 16 which is measured along the tangential or circumferential direction of the running surfaces 40, or the width direction of the contact surfaces 16, i.e. transversely with respect to the height direction h thereof.

It should be noted in this context that $1/Rt_{16}$ is equal to zero if the contact surface 16 of the transverse element 11 is not significantly rounded in the said width direction, which corresponds to the longitudinal direction of the drive belt 10, which will generally be the case. In addition, it is in practice often the case that in equation (3) the factor $1/Rr_{40}$ can be ignored with respect to the factor $1/Rt_{40}$, i.e. the rounding radius $Rr_{40}$ of the pulley running surface 40 in the radial direction is generally significantly larger than the rounding radius $Rt_{40}$ thereof in the tangential direction, specifically approximately by a factor of 5 or more.

It follows from the two practical items of information given above that the said optimum radial curvature radius $Rr_{16}$

of the contact surfaces 16 can generally be approximated with sufficient accuracy by simply matching it to the tangential rounding radius $Rt_{40}$ of the running surfaces 40, i.e. by determining the said reduced radius R according to the following equation (3'):

$$\frac{1}{R} = \frac{1}{Rr_{16}} + \frac{1}{Rt_{40}} \tag{3'}$$

b) What is known as the reduced Young's modulus of elasticity E' [N/m$^2$] :

$$\frac{1}{E'} = \frac{1}{2}\left(\frac{1-\nu_{40}^2}{E_{40}} + \frac{1-\nu_{16}^2}{E_{16}}\right) \tag{4}$$

in which ν denotes the transverse contraction coefficient of the material of the respective body 40, 16.

c) What is known as the normal force F exerted in the local contact point for each transverse element 11:

$$F = \frac{Kp(Rs/Rp)}{n_E p(Rs/Rp)\cdot\cos\lambda p(Rs/Rp)} \quad \text{or} \quad F = \frac{Ks(Rs/Rp)}{n_E s(Rs/Rp)\cdot\cos\lambda s(Rs/Rp)} \tag{5}$$

in which $n_E p(Rs/Rp)$ and $n_E s(Rs/Rp)$ represent the number of transverse elements 11 over which the respective clamping force Kp, Ks is supported at a given transmission ratio Rs/Rp, i.e. the length of that part of the drive belt 10 which is clamped by the respective primary or secondary pulley 2, 3 divided by the dimension of the transverse elements 11 in the longitudinal direction of the drive belt 10. Of course, in this context the maximum clamping force Kp(Rs/Rp) or Ks(Rs/Rp) used during operation of the transmission 1 at a defined transmission ratio Rs/Rp is taken into account.

It is also the case that when the transmission 1 is used in a motor vehicle in which the maximum primary torque Tp supplied is substantially independent of the transmission ratio Rs/Rp, at least for the secondary pulley 3, the quotient between the maximum normal force F exerted per transverse element 11 and the said number of transverse elements $n_E s(Rs/Rp)$ from equation (5), by way of first approximation, is proportional to the secondary running radius Rs, in which case the influence of the cosine factor in equation (5) is minimal.

d) What are known as the Hertzian formulae for elliptical point contact:

$$\tau = \frac{Rr}{Rt} \quad \text{or} \quad \tau = \frac{Rt}{Rr}, \quad \text{such that } \tau \le 1 \tag{6}$$

$$\kappa = \left(1 + \sqrt{\frac{\ln(16/\tau)}{2\tau}} - \sqrt{\ln 4} + 0.16\,ln\,\tau\right)^{-1} \tag{7}$$

$$a_x' = \kappa\left(1 + \frac{2(1-\kappa^2)}{\pi\kappa^2} - 0.25\,ln\,\kappa\right)^{\frac{1}{3}} \tag{8}$$

$$a_y' = \frac{a_x'}{\kappa} \tag{9}$$

$$a_x = a_x' \left(\frac{3FR}{E'}\right)^{\frac{1}{3}} \tag{10}$$

$$a_y = a_y' \left(\frac{3FR}{E'}\right)^{\frac{1}{3}} \tag{11}$$

e) The Hertzian contact pressure $p_H [N/m^2]$ is then:

$$p_H = \frac{F}{\pi a_x a_y} \tag{12}$$

The abovementioned equations (1) to (12) are solved for each transmission ratio Rs/Rp according to the radial curvature radius $Rr_{16}$ of the contact surfaces 16 of the transverse elements 11 using a constant and desired value, preferably the maximum permissible value, for the Hertzian contact pressure $p_H$, so that ultimately the entire, optimum flank contour $Rr_{16}(Rs/Rp)$ is found.

In this context, it is necessary to point out the fact that, for the sake of simplicity and practical applicability of the calculations and/or tests to be carried out when using the present invention, the profile of the radial curvature radius $Rr_{16}$ of the contact surfaces 16 can be approximated with sufficient accuracy by determining the optimum value for it in a limited number of, for example, 10, discrete transmission ratios Rs/Rp, and then determining the full flank contour $Rr_{16}$ (Rs/Rp) by fitting the calculated value with a polynomial function of at least the 4th order using, as boundary conditions, the two limit values for the contact angle $\alpha$ and for the present radial curvature radius $Rr_{16}$, i.e. those which are required at the location of the contact point P at the highest and lowest values (Low; OD) of the range of transmission ratios Rs/Rp of the transmission 1.

To illustrate the above-described method for determining the flank contour $Rr_{16}(Rs/Rp)$, the invention was applied to the transmission design with the KpKs curve from Figure 7. In this transmission design, the secondary pulley 3 is always, i.e. at any constant transmission ratio Rs/Rp, the slipping pulley 3, and consequently equations (3) to (5) only have to be solved for this pulley 3.

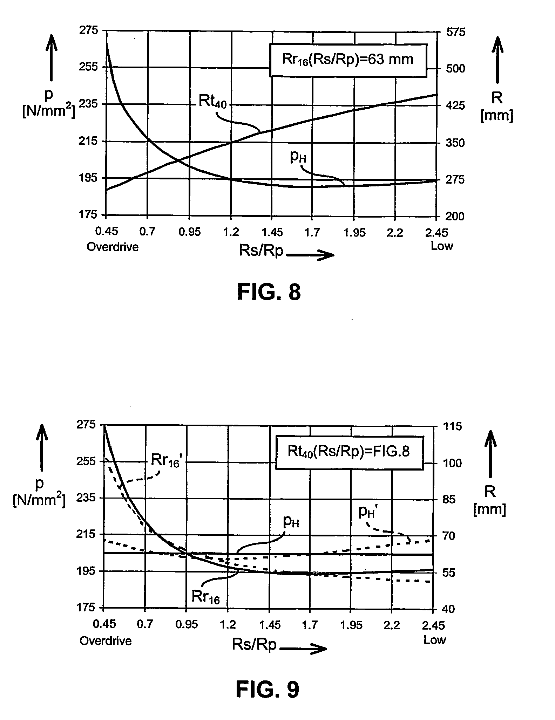

Figure 8 shows the profile, prescribed by the associated transmission design, of the tangential curvature radius $Rt_{40}$ of the running surface of the secondary pulley 3 in relation to the transmission ratio Rs/Rp, i.e. the said tangential convexity contour $Rt_{40}(Rs/Rp)$. The figure also shows the Hertzian contact pressure $p_H$ which will occur if the present flank contour $Rr_{16}(Rs/Rp)$ is used with a constant value, which is as high as possible, of the radial curvature radius $Rr_{16}$ of the contact surfaces 16, in this case 63 mm, which value is defined by the available height H of the contact surfaces 16 and the range of contact angles $\alpha$ (namely approximately 7.2° to 10.1° according to Figure 7).

It can be seen from this Figure 8 that the Hertzian contact pressure $p_H$ adopts a relatively high value of some 275 N/mm² at most and moreover varies considerably in relation to the transmission ratio Rs/Rp. According to the insights on which the present invention is based, a flank contour $Rr_{16}(Rs/Rp)$ of this type, however, is far from optimum and an advantageous lower maximum Hertzian contact pressure $p_H$ can be achieved within the boundary conditions of the height H of the contact surfaces 16 and the range of contact angles $\alpha$. In this way, wear behaviour which is less extreme and, moreover, more constant between the various transmission ratios Rs/Rp will be obtained.

Figure 9 shows the results of the above-discussed optimization method for determining the flank contour $Rr_{16}$ (Rs/Rp) for the transmission design with the KpKs curve from Figure 7 and the associated tangential convexity contour $Rt_{40}(Rs/Rp)$ of the secondary pulley 3 from Figure 8. Figure 9 gives the theoretically calculated curvature radius $Rr_{16}$ of the contact surface 16 of the transverse element 11 of the drive belt 10, i.e. the said flank contour $Rr_{16}(Rs/Rp)$, as well as the Hertzian contact pressure $p_H$ which occurs as a result during operation of the transmission 1. It can be seen from the figure that the Hertzian contact pressure $p_H$ adopts a relatively low value of about 205 N/mm², which corresponds to a reduction of about 25% compared to the conventional transmission design from Figure 8, and moreover has adopted a constant value, in accordance with the endeavours on which the invention is based.

In practice, a number of disruptive factors and/or inaccuracies generally occur, with the result that the abovementioned theoretically determined and consequently most optimum solution can only approximately be achieved. In this context, consideration may be given to the approximations in the Hertzian formulae themselves, as well as finite measurement accuracy of the production tooling used in particular for the transverse elements 11. The dashed lines in Figure 9 in this context represent a result which was achieved by the Applicant under practical conditions for on the one hand the curvature radius Rr16' actually used for the contact surface 16 of the transverse element 11 of the drive belt 10 and on the other hand the Hertzian contact pressure $p_H$' which actually occurs as a result during operation of the transmission 1. It can be concluded from Figure 9 that in this way, the theoretically ideal result was achieved to within a margin of about 5%.

If the simplifications to the method according to the invention proposed above, namely the possible approximation of the flank contour $Rr_{16}(Rs/Rp)$ with a polynomial, the possibility of ignoring the factor $1/Rr_{40}$ in equation (3) and/or the approximation of the normal force F from equation (5), are used, the Hertzian contact pressure $p_H$ which actually occurs will vary with a margin of around 10% about a mean value for this pressure, which is still always better by a factor of 2 than for the conventionally designed transmission 1 from Figure 8. Moreover, the present invention, as has been stated, also leads to a considerable reduction in the (maximum) level of the Hertzian contact pressure $p_H$ or, as an alternative, to an advantageous reduction in the required height H of the contact surface 16.

Finally, the invention also relates to the transmission 1 according to Claims 9 and 10, in the design of which the abovementioned insights illustrated in Figures 7, 8 and 9 are embodied in concrete form, and which is otherwise in the form typical of the prior art.

## Claims

1. Drive belt for use in a continuously variable transmission (1) and provided with a series of transverse elements (11), which are provided on either side with a contact surface (16) with a radial contour (Rr16(Rs/Rp)), i.e. that is curved in the vertical or radial direction, and with a set of continuous rings (12), which is accommodated in a recess in the transverse elements (11), the transverse elements (11) being accommodated in the drive belt (10) such that they can move along the circumferential direction of the set of rings (12), **characterized in that** a radius of curvature (Rr16) of the radial contour (Rr16(Rs/Rp)) of the contact surfaces (16) in the radially inward direction, i.e. in the direction from the top downwards over a height dimension H thereof, initially decreases more quickly in a first range of a contact angle (λs) that is defined between the said contact surfaces (16) and the radial direction than in a second range of the said contact angle (λs).

2. Drive belt according to Claim 1 **characterized in that** in the second range of the said contact angle (λs) the said radius of curvature (Rr16) is constant.

3. Drive belt (10) according to Claim 1 or 2, **characterized in that** the first range of the contact angle (λs) comprises at least the angle range between 7 and 8 degrees and **in that** the second range of the contact angle (λs) comprises at least the angle range between 8.5 and 8.75 degrees, preferably the angle range between 8.5 and 10 degrees.

4. Drive belt (10) according to Claim 1, 2 or 3, **characterized in that** the said radius of curvature (Rr16) decreases by a factor of 5 to 15, preferably approximately 10, times more in the first range of the contact angle (λs) than in the second range of the contact angle (λs).

## Patentansprüche

1. Antriebsriemen zur Verwendung in einem stufenlos verstellbaren Getriebe (1), der mit einer Reihe von Querelementen (11), die auf beiden Seiten mit einer Kontaktfläche (16) versehen sind, welche eine radiale Kontur (Rr16 (Rs/Rp)) aufweist, das heißt in Vertikal- oder Radialrichtung gekrümmt ist, und mit einem Satz von durchgehenden Ringen (12) versehen ist, der in einer Aussparung in den Querelementen (11) untergebracht ist, wobei die Querelemente (11) so in dem Antriebsriemen (10) untergebracht sind, dass sie sich entlang der Umfangsrichtung des Satzes von Ringen (12) bewegen können, **dadurch gekennzeichnet, dass** sich ein Krümmungsradius (Rr16) der radialen Kontur (Rr16/Rs/Rp) der Kontaktflächen (16) in radial nach innen verlaufender Richtung, das heißt in von oben nach unten über eine Höhenabmessung H davon verlaufender Richtung, anfangs in einem ersten Bereich eines Kontaktwinkels (λs), der zwischen den Kontaktflächen (16) und der Radialrichtung definiert ist, schneller ändert als in einem zweiten Bereich des Kontaktwinkels (λs).

**2.** Antriebsriemen nach Anspruch 1, **dadurch gekennzeichnet, dass** in dem zweiten Bereich des Kontaktwinkels (λs) der Krümmungsradius (Rr16) konstant ist.

**3.** Antriebsriemen (10) nach Anspruch 1 oder 2, **dadurch gekennzeichnet, dass** der erste Bereich des Kontaktwinkels (λs) mindestens den Winkelbereich zwischen 7 und 8 Grad umfasst und dass der zweite Bereich des Kontaktwinkels (λs) mindestens den Winkelbereich zwischen 8,5 und 8,75 Grad, vorzugsweise den Winkelbereich zwischen 8,5 und 10 Grad, umfasst.

**4.** Antriebsriemen (10) nach Anspruch 1, 2 oder 3, **dadurch gekennzeichnet, dass** der Krümmungsradius (Rr16) in dem ersten Bereich des Kontaktwinkels (λs) um einen Faktor von 5 bis 15, vorzugsweise ca. 10, mehr abnimmt als im zweiten Bereich des Kontaktwinkels (λs).

**Revendications**

**1.** Courroie d'entraînement pour l'utilisation dans une transmission à variation continue (1) et pourvue d'une série d'éléments transversaux (11) qui sont disposés de chaque côté avec une surface de contact (16) de contour radial (Rr16(Rs/Rp)), c'est-à-dire qui est incurvée dans la direction verticale ou radiale, et avec un ensemble de bagues continues (12), qui est reçu dans un retrait dans les éléments transversaux (11), les éléments transversaux (11) étant reçus dans la courroie d'entraînement (10) de telle sorte qu'ils puissent se déplacer le long de la direction circonférentielle de l'ensemble de bagues (12), **caractérisée en ce qu'**un rayon de courbure (Rr16) du contour radial (Rr16(Rs/Rp)) des surfaces de contact (16) dans la direction radialement intérieure, c'est-à-dire dans la direction de haut en bas sur une dimension en hauteur H de celles-ci, diminue initialement plus fortement dans une première plage d'un angle de contact (λs) qui est défini entre lesdites surfaces de contact (16) et la direction radiale, que dans une deuxième plage dudit angle de contact (λs).

**2.** Courroie d'entraînement selon la revendication 1, **caractérisée en ce que** dans la deuxième plage dudit angle de contact (λs), ledit rayon de courbure (Rr16) est constant.

**3.** Courroie d'entraînement selon la revendication 1 ou 2, **caractérisée en ce que** la première plage de l'angle de contact (λs) comprend au moins la plage angulaire entre 7 et 8 degrés et **en ce que** la deuxième plage de l'angle de contact (λs) comprend au moins la plage angulaire entre 8,5 et 8,75 degrés, de préférence la plage angulaire entre 8,5 et 10 degrés.

**4.** Courroie d'entraînement (10) selon la revendication 1, 2 ou 3, **caractérisée en ce que** ledit rayon de courbure (Rr16) diminue d'un facteur de 5 à 15, de préférence d'environ 10 fois plus dans la première plage de l'angle de contact (λs) que dans la deuxième plage de l'angle de contact (λs).

**FIG. 1**

**FIG. 2**

**FIG. 3**

**FIG. 4**

**FIG. 5**

**FIG. 6**

**FIG. 7**

**FIG. 8**

**FIG. 9**

**EP 1 831 592 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1218654 A
- WO 2002061304 A
- JP 63053352 A
- EP 1441151 A2
- NL 1022157 A
- NL 1023668
- NL 1024918